# EUROPÄISCHE PATENTSCHRIFT

(11) **EP 4 230 553 B1**
(45) Veröffentlichungstag und Bekanntmachung des Hinweises auf die Patenterteilung: **28.01.2026**
(21) Anmeldenummer: 23000021.8
(22) Anmeldetag: 14.02.2023
(51) Int. Cl.: B65G 47/90, G05B 19/418

(54) **FÖRDERSYSTEM EINER FERTIGUNGSZELLE**
CONVEYING SYSTEM OF A PRODUCTION CELL
SYSTÈME DE TRANSPORT D'UNE CELLULE DE FABRICATION

(30) Priorität: 16.02.2022 DE 102022000594
(43) Veröffentlichungstag der Anmeldung: 23.08.2023
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A1- 3 170 776
- EP-B1- 3 359 351
- DE-A1- 102020 001 963

## Beschreibung

Die Erfindung betrifft ein Fördersystem einer Fertigungszelle mit einem ortsfesten Steuerungsmodul und mit mindestens einem bahn- oder gleisgebundenen selbstfahrenden Fahrzeug sowie eine Fertigungszelle mit einer speicherprogrammierbaren Steuerung und mit einem Fördersystem.

Aus der DE 10 2017 012 077 A1 ist ein Fördersystem mit entlang einer Tragschiene verfahrbaren Werkstückwagen bekannt. Die spanende Werkstückbearbeitung kann zu Beeinträchtigungen der Daten- und Signalübertragung führen.

Aus der EP 3 170 776 A1 ist eine Fördervorrichtung mit einer ortsfesten Steuervorrichtung, mit Fördereinheiten, die eine Master-Kommunikationsschnittstelle aufweisen und mit Fördereinheiten, die eine Slave-Kommunikationsschnittstelle aufweisen, bekannt. Jedes Fahrzeug hat eine Steuereinheit, die ein auf dem Fahrzeug mitgeführtes Lastaufnahmemittel steuert. Die Steuervorrichtung kann die Fördereinheiten regelmäßig zur Übermittlung von Positionsdaten auffordern.

Der vorliegenden Erfindung liegt die Problemstellung zugrunde, die Zuverlässigkeit des Fördersystems zu erhöhen.

Diese Problemstellung wird mit den Merkmalen des Hauptanspruches gelöst. Dazu hat das Steuerungsmodul mindestens eine Antenne zur bidirektionalen drahtlosen Übertragung von Daten und Signalen zwischen dem Fahrzeug und dem Steuerungsmodul. Das Fahrzeug weist mindestens eine Antenne auf, die einer Antriebseinheit des Fahrzeugs zugeordnet ist. Die Antriebseinheit weist einen Umwandler für die Umwandlung eines vom Steuerungsmodul in einem Protokollformat übermittelten Datensatzes in digitale Ansteuersignale eines Antriebsmotors der Antriebseinheit auf. Außerdem weist die Antriebseinheit einen geschwindigkeitsbezogenen Sensor auf, wobei die Antriebseinheit ausgebildet ist, das Ausgangssignal dieses geschwindigkeitsbezogenen Sensors in einem Protokollformat an das Steuerungsmodul zu übertragen, sodass das Steuerungsmodul das Fahrprofil des Fahrzeugs in Echtzeit in einem geschlossenen Kreis regelt.

In der Fertigungszelle ist das Steuerungsmodul an die speicherprogrammierbare Steuerung angeschlossen.

Das Steuerungsmodul regelt die Bewegung sämtlicher angebundener Fahrzeuge der Fertigungszelle. Hierfür wird für jedes einzelne Fahrzeug ein Fahrprofil an dieses Fahrzeug übertragen. Dieses Fahrprofil umfasst beispielsweise Werte für die Beschleunigung, die Verfahrgeschwindigkeit und den Weg. Aus den Rückmeldungen des Ist-Zustandes der einzelnen Fahrzeuge werden im Steuerungsmodul neue Soll-Werte berechnet und übermittelt. Die übermittelten Daten sind in Protokollform gehalten und werden drahtlos zwischen dem Steuerungsmodul und jedem einzelnen Fahrzeug in beide Richtungen übertragen.

Die beispielsweise mindestens eine jeweils dem Fahrzeug zugeordnete Handhabungsvorrichtung verfügt über einen internen Regelkreis mit einem Regler, einem Messglied und einem Greiferablaufprogrammspeicher. Zum Starten eines Greiferablaufprogramms werden binäre Identifikations- und Startsignale vom Speichermodul drahtlos an die Handhabungsvorrichtung übertragen. Bei Beendigung des Greiferablaufprogramms wird ein Statussignal von der Handhabungsvorrichtung drahtlos an das Steuerungsmodul übermittelt. Damit wird zur Informationsübertragung zwischen dem jeweiligen Sender und dem jeweiligen Empfänger jeweils eine Punkt-zu-Punkt-Verbindung aufgebaut.

Somit entfällt ein Verlegen von Daten- und Signalleitungen in der Fertigungshalle und entlang des Fahrzeugs. Durch Verunreinigungen hervorgerufene elektrische Widerstände an Kontaktstellen der Signal- und Datenleitungen werden verhindert.

Weitere Einzelheiten der Erfindung ergeben sich aus den Unteransprüchen und der nachfolgenden Beschreibung schematisch dargestellter Ausführungsformen.
- Figur 1:: Fertigungszelle;
- Figur 2:: Steuerungsmodul;
- Figur 3:: Werkstückwagen mit Stromschiene;
- Figur 4:: Werkstückwagen;
- Figur 5:: Werkstückwagen ohne Gehäuse;
- Figur 6:: Blockdiagramm der Steuerung des Fördersystems.

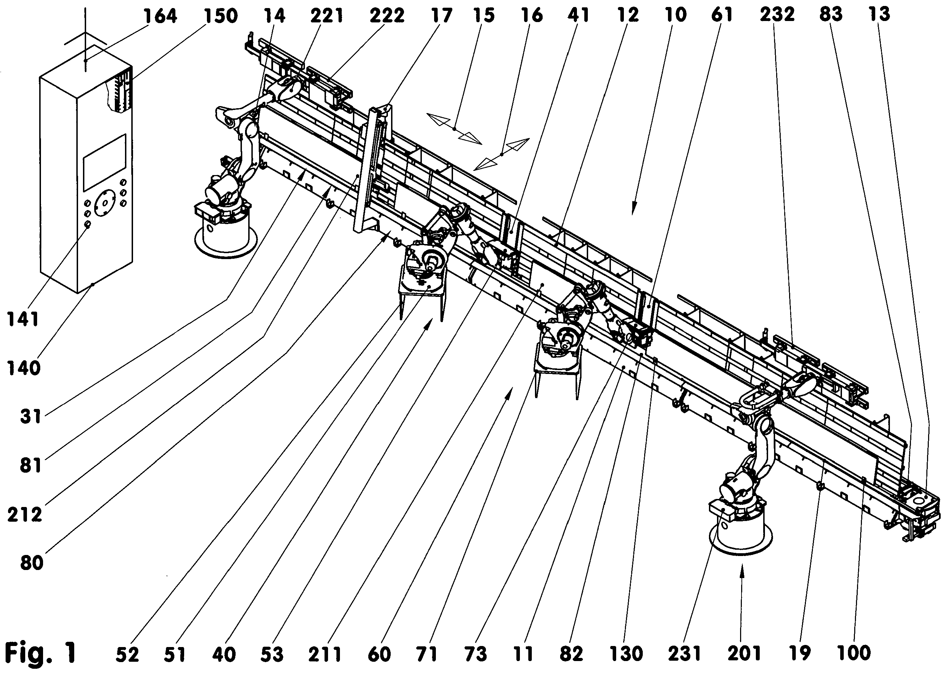

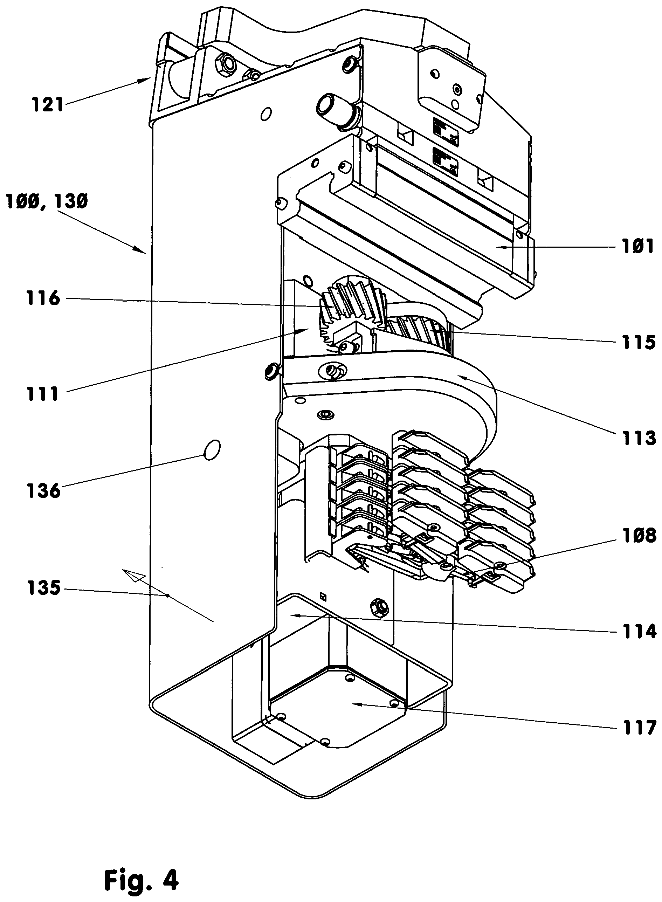

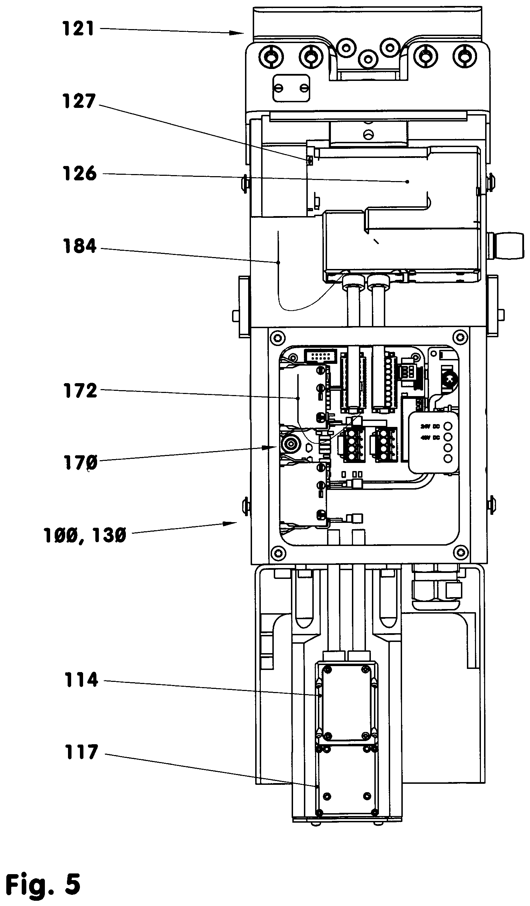

Die Figuren 1 bis 5 zeigen eine Fertigungszelle (10) und Einzelteile hiervon. Die Fertigungszelle (10) ist z.B. Teil eines flexiblen Fertigungssystems. Im flexiblen Fertigungssystem werden beispielsweise Werkstücke (211, 212) zur mehrstufigen Bearbeitung verschiedenen, nicht miteinander verketteten Stationen zugeführt. Nach Beendigung eines Arbeitsganges wird das einzelne Werkstück (211; 212) abhängig von der Reihenfolge und Art der werkstückspezifisch zur Bearbeitung erforderlichen Arbeitsgänge zur nächsten Fertigungszelle (10) oder Fertigungsstation gefördert. In einer Fertigungszelle (10) kann jedoch auch eine Komplettbearbeitung eines Werkstücks (211; 212) durchgeführt werden. Der einzelne Bearbeitungsvorgang kann z.B. ein Umformen, ein Trennen und/oder ein Fügen sein.

Die in der dargestellten Fertigungszelle (10) bearbeiteten Werkstücke (211, 212) sind platten- oder bretterartig ausgebildet. Der Werkstoff des Werkstücks (211, 212) kann Holz, Metall, ein Verbundwerkstoff, Glas, Kunststoff, etc. sein. Er kann über seine in der Längsrichtung (15) orientierte Länge einen konstanten Querschnitt haben. Es ist aber auch denkbar, ein z.B. vorbearbeitetes Werkstück, eine bereits gefügte Teilbaugruppe, etc. als Werkstück (211, 212) einzusetzen. Im Folgenden wird die Fertigungszelle (10) mit einer Holzplatte als Werkstück (211; 212) beschrieben. Diese Platte (211; 212) hat beispielsweise eine Länge von drei Metern, eine Breite von 600 Millimetern und eine Dicke von 25 Millimetern.

Die dargestellte Fertigungszelle (10) umfasst eine erste Bearbeitungsstation (40), eine zweite Bearbeitungsstation (60) und eine Werkstücktransportvorrichtung (81). Die Werkstücktransportvorrichtung (81) ist Teil eines Fördersystems (80) der Fertigungszelle (10). Die beiden Bearbeitungsstationen (40, 60) sind im Materialfluss hintereinandergeschaltet. Mittels des Fördersystems (80) kann ein Werkstück (211; 212) von einem Einsetzbereich (31) zur ersten Bearbeitungsstation (40), zur zweiten Bearbeitungsbereich (60) und in einen Entnahmebereich (201) gefördert werden. Das Werkstück (211; 212) wird hierfür in Handhabungsvorrichtungen (121) gleisgebundener oder bahngebundener Fahrzeuge (100; 130) des Fördersystems (80) eingesetzt, die das Werkstück (211; 212) durch die Fertigungszelle (10) fördern. Im dargestellten Ausführungsbeispiel sind die Fahrzeuge (100; 130) gleisgebundene Werkstückwagen (100; 130). Die Fertigungszelle (10) kann auch mehr als zwei Bearbeitungsstationen (40, 60) aufweisen.

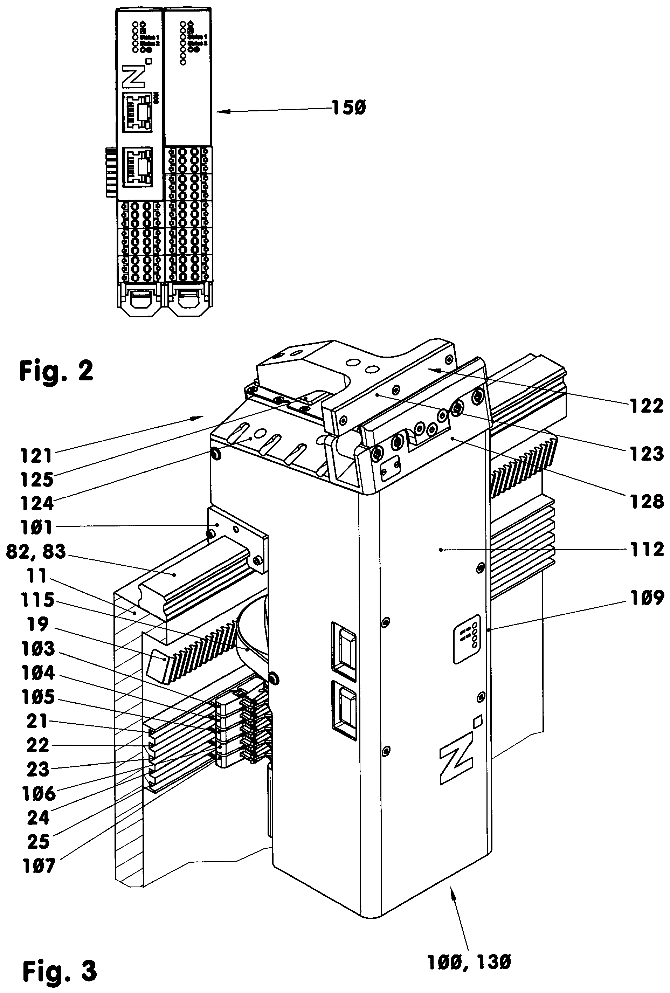

Die Fertigungszelle (10) hat eine z.B. zentrale speicherprogrammierbare Steuerung (141), die die Funktionen sämtlicher Bearbeitungsstationen (40, 60), des Fördersystems (80) und weiterer Funktionen koordiniert. Diese ist beispielsweise in einem Steuerungsschrank (140) untergebracht. Die Steuerung der einzelnen Funktionen erfolgt z.B. mittels Untersteuerungen. Für das Fördersystem (80) wird beispielsweise das in der Figur 2 dargestellte Steuerungsmodul (150) eingesetzt. Dieses ist beispielsweise ebenfalls im Steuerungsschrank (140) angeordnet. Mit den übergeordneten Funktionsbaugruppen der speicherprogrammierbaren Steuerung (141) ist es beispielsweise mittels Datenleitungen (155) verbunden.

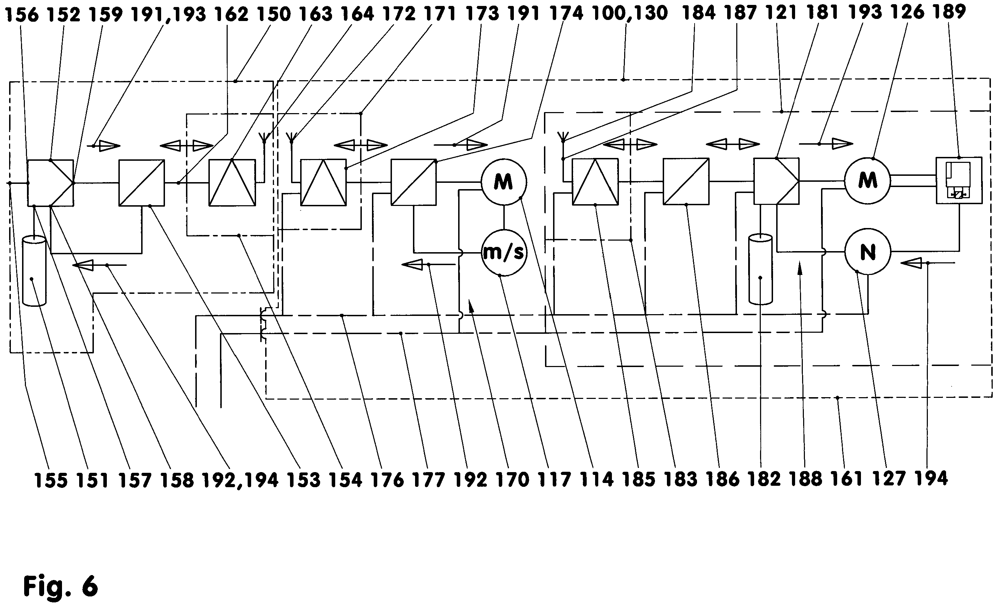

Die Figur 6 zeigt ein vereinfachtes Blockdiagramm der Steuerung des Fördersystems (80). Das Steuerungsmodul (150) hat einen Programmspeicher (151), einen Regler (152), einen Umwandler (153) und einen Sende-Empfänger (154). Im Programmspeicher (151) sind Fahrprogramme für die Fahrzeuge (100; 130) abrufbar gespeichert. In diesen Programmen sind beispielsweise sämtliche für einen Fahrauftrag erforderlichen Parameter gespeichert. Diese umfassen beispielsweise die Beschleunigung beim Anfahren und beim Verzögern, die Geschwindigkeit sowie Zeitvorgaben für die einzelnen Parameter. Gegebenenfalls können auch Wegmarken gespeichert sein. Die einzelnen Fahrprogramme sind individuell für jedes einzelne Fahrzeug (100; 130) oder auch für Gruppen von Fahrzeugen (100; 130) abrufbar.

Der Regler (152) hat drei Reglereingänge (156 - 158) und einen Reglerausgang (159). Am ersten Reglereingang (156) ist die Datenleitung (155) angeschlossen. Über diese Datenleitung (155) werden unter anderem die Befehle zum Starten des Regelkreises des Fördersystems (80) übertragen. In der Gegenrichtung werden beispielsweise Bestätigungsmeldungen zum Abschluss von Fahraufträgen oder Teilfahraufträgen übermittelt.

Am zweiten Reglereingang (157) ist der Programmspeicher (151) angeschlossen. Der zweite Reglereingang (157) ist beispielsweise ein Sollwerteingang (157).

Der dritte Reglereingang (158) ist ein Messwerteingang (158). Hier wird dem Regler (152) ein an der Regelstrecke (161) ermittelter Messwert zugeleitet. Dieser Messwert kann gegebenenfalls aufbereitet und/oder verdichtet sein. Im Ausführungsbeispiel ist der Messwert beispielsweise ein Wert der Fahrgeschwindigkeit des Fahrzeugs (100; 130) und/oder ein hieraus abgeleiteter Wert wie beispielsweis der zurückgelegte Weg oder die Beschleunigung.

Am Reglerausgang (159) werden die Stellgrößen an die Regelstrecke (161) ausgegeben. Die Regelstrecke (161) dieses Regelkreises ist das Verfahren des Fahrzeugs (100; 130) relativ zum Schienentragkörper (11). Hierfür werden die Stellgrößen in einer ersten Senderichtung (191) an einen Umwandler (153) geleitet. Im Umwandler (153) werden die empfangenen digitalen Daten in ein Protokollformat umgewandelt. Dieses Protokollformat ist beispielsweise ein Datenformat nach IEC EN 61131 Teil 9 für die Kommunikation über eine Punkt-zu-Punkt-Verbindung. Auch der Einsatz eines anderen Protokollformats ist denkbar. Der Umwandler (153) kann hierbei ein Netzwerkprozessor sein. Gegebenenfalls können auch unterschiedliche Umwandler eingesetzt werden, um Daten in voneinander abweichenden Protokollformaten weiterzuleiten. Auch ist es denkbar, einzelne Daten, z.B. binäre Daten, ohne Umwandlung zu übertragen.

Der Signallauf vom Sende-Empfänger (154) in Richtung des Messwerteingangs (158) des Reglers (152) erfolgt in einer zweiten Übertragungsrichtung (192), die entgegengesetzt zur ersten Übertragungsrichtung (191) orientiert ist. In der zweiten Übertragungsrichtung (192) wird das in Protokollform ankommende Datenpaket im Umwandler (153) in digitale Daten umgewandelt. Anstatt eines gemeinsamen Umwandlers (153) können für die beiden Übertragungsrichtungen (191, 193; 192, 194) auch zwei separate Umwandler (153) eingesetzt werden.

Der vom Regler (152) kommende Datensatz wird vom Umwandler (153) im umgewandelten Datenformat entlang einer Datenleitung (162) dem Sende-Empfänger (154) zugeführt. Die Datenleitung (162) kann eine ungeschirmte dreiadrige Leitung sein. Der Sende-Empfänger (154) weist einen Modulator-Demodulator (163) und eine Antenne (164) auf. Außerdem kann der Sende-Empfänger beispielsweise mindestens einen Hochfrequenzgenerator, mindestens einen Verstärker und mindestens eine Filterbaugruppe haben. In der ersten Übertragungsrichtung (191) wird beispielsweise ein hochfrequentes Trägersignal im Modulator-Demodulator (163) mittels des Datenprotokolls moduliert. Das modulierte Signal wird mittels der Antenne (164) abgestrahlt. Die Abstrahlung erfolgt beispielsweise in einem Frequenzbereich von 2,4 Gigahertz. Auch eine Abstrahlung im Bereich von 3,6 Gigaherzt, 5,8 Gigahertz, etc. ist denkbar. Die Antenne (164) kann in der Fertigungshalle versetzt zum Steuerungsschrank (140) angeordnet sein.

In der zweiten Übertragungsrichtung (192) wird beispielsweise derselbe Sende-Empfänger (154) eingesetzt. Die mittels der Antenne (164) empfangenen Datenpakete werden im Sende-Empfänger (154) mittels des Modulators-Demodulators (163) demoduliert. Anschließend wird das niederfrequente Datenpaket z.B. über die Datenleitung (162) zum Umwandler (153) geleitet.

Anstatt des beschriebenen Sende-Empfängers (154) mit einem Sendezweig und einem Empfangszweig kann auch ein von einem Empfänger getrennter Sender eingesetzt werden. Der Sender verfügt dann über den Modulator. Der Empfänger hat einen Demodulator. Für den Sender und für den Empfänger kann dieselbe Antenne (164) eingesetzt werden. Es ist aber auch denkbar, getrennte Antennen für das Senden und für das Empfangen einzusetzen.

In der Fertigungshalle kann mehr als eine Antenne (164) zur Abstrahlung des modulierten Signals vorgesehen sein. Jeder Antenne (164) ist dann ein Modulator-Demodulator (163) oder ein Modulator zugeordnet. Für die Modulation der einzelnen Sender werden beispielsweise unterschiedliche Trägerfrequenzen eingesetzt.

Für den Empfang von Signalen können ebenfalls mehrere Antennen eingesetzt werden. Diese können mit einem gemeinsamen Modulator-Demodulator (163) oder einem gemeinsamen Demodulator verbunden sein. Es ist aber auch denkbar, jeder Empfangsantenne oder Gruppen von Empfangsantennen einen Modulator-Demodulator (163) oder einen Demodulator zuzuordnen.

Bei Einsatz einer einzelnen Antenne (164) für das Senden und Empfangen wird im zeitlichen Ablauf entweder ein Signal ausgesendet oder ein Signal empfangen. Die Umschaltung zwischen Senden und Empfangen kann beispielsweise innerhalb von Millisekunden erfolgen. Beim Einsatz getrennter Antennen für den Senderzweig und für den Empfangszweig kann das Senden und Empfangen zeitlich parallel zueinander erfolgen. Hierbei sind die Sende- und Empfangsfrequenzen beispielsweise so weit voneinander beabstandet, dass keine Interferenzen entstehen.

Die in den genannten Figuren dargestellte Fertigungszelle (10) hat einen in der Längsrichtung (15) orientierten Schienentragkörper (11), auf dem ein Leitgitter (12), ein Transportgleis (82) und ein Rückführgleis (83) angeordnet sind.

Sowohl das Transportgleis (82), als auch das Rückführgleis (83) sind in der Längsrichtung (15) orientierte gerade Schienen (82; 83) für Kugelumlaufschuhe (101). Sie haben ein identisches Querschnittsprofil. Unterhalb des Transportgleises (82) und des Rückführgleises (83) sind jeweils eine Zahnstange (19) und elektrische Leiterbahnen (21 - 25) angeordnet. An beiden Enden des Schienentragkörpers (11) sind Drehscheiben (13, 14) zum Überführen der Werkstückwagen (100; 130) von der Transportschiene (82) auf die Rückführschiene (83) bzw. von der Rückführschiene (83) auf die Transportschiene (82) angeordnet. Anstatt der Drehscheiben (13, 14) ist auch eine Parallelverschiebung der Werkstückwagen (100; 130) zwischen den Tragschienen (82, 83) denkbar. Auch eine umlaufende Schiene ist bei entsprechender Gestaltung der Schienenlagerungen der Werkstückwagen (100; 130) denkbar. Bei einem bahngebundenen Fahrzeug (100; 130) ist dieses beispielsweise entlang des Hallenbodens z.B. als Flurförderer entlang einer Schiene, einer Induktionsbahn, etc. verfahrbar. Bei einer bahngebundenen Führung des Fahrzeugs (100, 130) kann die Führung auch virtuell ausgebildet sein.

Das Leitgitter (12) ist beispielsweise um einen Winkel von 10 Grad geneigt zu einer vertikalen Ebene angeordnet. Es kann aber auch vertikal angeordnet sein. Das Leitgitter (12) hat einen konstanten Abstand zur Transportschiene (82). In der Längsrichtung (15) ist es im Bereich von zwei Stützvorrichtungen (41, 61) unterbrochen. Beispielsweis begrenzt es den Arbeitsraum der Bearbeitungsstationen (40, 60) in einer Querrichtung (16).

Die einzelnen Werkstückwagen (100; 130), vgl. die Figuren 3 - 5, sind beispielsweise identisch zueinander ausgebildet. Es können auch mehr oder weniger als die dargestellte Anzahl der Werkstückwagen (100; 130) eingesetzt werden.

Jeder Werkstückwagen (100; 130) hat einen Kugelumlaufschuh (101), der die jeweilige Tragschiene (82; 83) umgreift. Unterhalb des Kugelumlaufschuhs (101) haben die Werkstückwagen (100; 130) jeweils ein motorgetriebenes Antriebsrad (115), das mit der Zahnstange (19) kämmt. Für die Energiezufuhr hat der Werkstückwagen (100; 130) beispielsweise Schleifkontakte (103 - 107), die die elektrischen Leiterbahnen (21 - 25) kontaktieren. Auch eine induktive Energieübertragung ist denkbar. Die Werkstückwagen (100; 130) sind selbstfahrend ausgebildet.

Im dargestellten Ausführungsbeispiel sind am Schienentragkörper (11) beidseitig fünf Leiterbahnen (21 - 25) angeordnet. Zwischen den obersten beiden Leiterbahnen (21, 22) liegt eine Gleichspannung von 48 Volt an. Dieses Spannungspotential wird im Folgenden als Lastspannung bezeichnet. Zwischen der dritten Leiterbahn (23) und der vierten Leiterbahn (24) besteht eine Gleichspannung von 24 Volt. Dieses Spannungspotential wird im Folgenden als Steuerspannung bezeichnet. Die fünfte Leiterbahn (25) liegt auf dem Erdpotential. Beispielsweise ist sie in einem Sternpunkt mit dem Erdanschluss der Fertigungshalle verbunden.

Fahrzeugseitig ist jeder Leiterbahn (21 - 25) ein Schleifkontakt (103 - 107) zugeordnet. Alle Schleifkontakte (103 - 107) sind gleichartig aufgebaut und z.B. über eine Parallellogrammführung (108) gehalten. Sie sind in der vom Gehäuse (109) des Werkstückwagens (100; 130) abgewandten Richtung federbelastet. Der Stromkreis der Lastspannung ist im Ausführungsbeispiel zumindest fahrzeugseitig getrennt vom Stromkreis der Steuerspannung ausgebildet. Das Gehäuse (109) liegt auf dem Erdpotential.

Es ist auch denkbar, zusätzlich zum Erdpotential nur die Steuerspannung oder nur die Lastspannung über die Leiterbahnen (21 - 25) und die Schleifkontakte (103 - 107) zu übertragen. Das gegebenenfalls erforderliche weitere Spannungspotential kann dann aus dieser Spannung z.B. mittels eines Spannungsteilers oder eines Spannungsvervielfachers erzeugt werden. Im oder am Fahrzeug (100; 130) kann auch mindestens ein Akkumulator angeordnet sein. Das Fahrzeug (100; 130) verfügt dann über eine mitfahrende Energiequelle. Diese kann befestigt installiert oder schnell austauschbar sein. Der Akkumulator kann an einer Wartungsstation wiederaufgeladen werden. Die einzige elektrische Verbindung zwischen dem Fahrzeug (100; 130) und dem Schienentragkörper (11) ist dann der Potentialausgleich des Erdpotentials.

Der einzelne Werkstückwagen (100; 130) hat eine Antriebseinheit (111) und beispielsweise mindestens eine Handhabungsvorrichtung (121). Die Antriebseinheit (111) ist in einem Gehäuse (109) angeordnet, auf dem die Handhabungsvorrichtung (121) befestigt ist. Ein rückseitiger Deckel (112) verschließt das Gehäuse (109) im Bereich der Antriebseinheit (111). Dieser Deckel (112) kann beispielsweise aus Kunststoff, Glas oder aus einem anderen nichtmetallischen Werkstoff hergestellt sein.

Die Antriebseinheit (111) hat einen Flanschträger (113), der einen Antriebsmotor (114) und das von diesem angetriebene Antriebsrad (115) trägt. Der Antriebsmotor (114) ist z.B. ein Servomotor (114), der beispielsweise über eine Ansteuerungsbaugruppe (170) individuell angesteuert wird. Das Antriebsrad (115) ist z.B. über ein mehrstufiges Wälzgetriebe mit dem Antriebsmotor (114) gekoppelt. Im dargestellten Ausführungsbeispiel ist das Antriebsrad (115) schrägverzahnt ausgebildet.

Im Flanschträger (113) ist beabstandet vom Antriebsrad (115) ein Schmierrad (116) drehbar gelagert. Das Schmierrad (116) ist ebenfalls schrägverzahnt ausgebildet und kämmt im Betrieb mit der Zahnstange (19). Beispielsweise ist das Schmierrad (116) als Filzrad ausgebildet. Das Schmierrad (116) kann einen anderen Durchmesser als das Antriebsrad (115) aufweisen. Beispielsweise werden die Flanken des Schmierrads (116) über eine im Flanschträger (113) gelagerte Schmierradwelle mit Schmiermittel, z.B. einem Öl aus einem Schmieraggregat, benetzt. Dieses Schmiermittel wird beim Abwälzen auf die Zahnstange (19) übertragen. Auch eine andere Ausbildung einer Zahnstangenschmierung ist denkbar.

Der Antriebsmotor (114) liegt im Ausführungsbeispiel auf dem Lastspannungspotential. Die Komponenten der im Gehäuse (109) angeordneten Ansteuerungsbaugruppe (170) liegen elektrisch auf dem Steuerspannungspotential. Die Ansteuerungsbaugruppe (170) weist im Ausführungsbeispiel einen Sende-Empfänger (171) mit einer Antenne (172), einen Umwandler (174) und gegebenenfalls einen Mikrorechner auf. Die Antenne (172) ist im Ausführungsbeispiel in der Nähe des Deckels (112) im Gehäuse (109) des Werkstückwagens (100; 130) angeordnet. Die mittels der Antenne (172) empfangenen Signale des Steuerungsmoduls (150) werden mittels eines Demodulator-Modulators (173) demoduliert und entlang einer Datenleitung zum Umwandler (174) geführt. Der Demodulator-Modulator (173) und der Umwandler (174) können beispielsweise so aufgebaut sein wie die im Zusammenhang mit dem Steuerungsmodul (150) beschriebenen Bauteile. Die vom Umwandler (174) zum Antriebsmotor (114) übertragenen digitalen Signale steuern z.B. den Antriebsstrom des Antriebsmotors (114).

Die Antriebseinheit (111) hat weiterhin mindestens einen geschwindigkeitsbezogenen Sensor (117). Dies ist beispielsweise ein absoluter Drehgeber, der auf der Motorwelle des Antriebsmotors (114) sitzt. Sein z.B. analoges Ausgangssignal wird beispielsweise im Umwandler (174) in eine Protokollform umgewandelt. Das Datenprotokoll kann dem oben genannten Datenprotokoll entsprechen. Das umgewandelte Signal wird auf einen Träger aufmoduliert und mittels der Antenne (172) abgestrahlt. Der Sender und der Empfänger für die Ansteuerung der Antriebseinheit (111) können auch getrennt voneinander ausgebildet sein.

Am Werkstückwagen (100; 130) kann mindestens ein Abstandssensor (136) angeordnet sein. Dieser ist z.B. in der Fahrtrichtung (135) des Werkstückwagens (100; 130) orientiert. Wird z.B. mittels des Abstandssensors (136) ein Hindernis erkannt, wird der Werkstückwagen (100; 130) verzögert oder stillgesetzt.

Oberhalb des Kugelumlaufschuhs (101) hat der einzelne Werkstückwagen (100; 130) eine Handhabungsvorrichtung (121). Die Handhabungsvorrichtung (121) ist z.B. austauschbar an einer die Antriebseinheit (111) aufweisenden Grundbaugruppe des Fahrzeugs (100; 130) befestigt. Sie kann auch in diese Grundbaugruppe eingebaut sein.

Die Handhabungsvorrichtung (121) hat eine Werkstückaufnahme (122). Dies ist z.B. eine gerade Nut, in die ein Werkstück (211; 212) einsetzbar ist. In der Werkstückaufnahme (122) ist das einzelne Werkstück (211; 212) z.B. mittels zweier Greifelemente (123) sicherbar.

Die Handhabungsvorrichtung (121) hat ein Vorrichtungsgehäuse (124), in dem beispielsweise zwei Greiferschlitten (125) relativ zueinander verschiebbar gelagert sind. Jeder der Greiferschlitten (125) trägt ein Greifelement (123). Die Greiferschlitten (125) werden mittels eines gemeinsamen Greiferantriebsmotors (126) angetrieben. Dieser wird z.B. mit der Lastspannung betrieben. Der Greiferantriebsmotor (126) kann auch mit dem Potential der Steuerspannung betrieben werden. An den Greiferschlitten (125) und am Vorrichtungsgehäuse (124) ist beispielsweise als greifkraftbezogener Sensor (127) ein Wegmesssystem (127) angeordnet. Das Ausgangssignal dieses Wegmesssystems (127) ist beispielsweise ein greifkraftproportionales analoges Signal, z.B. im Bereich zwischen 4 und 20 Milliampere. Anstatt des Wegmesssystems (127) oder zusätzlich zu diesem kann z.B. ein Kraftsensor an den Greifelementen (123) eingesetzt werden. Dies kann ein Verformungssensor in der Bauform eines Dehnmessstreifens sein. Mittels einer Brückenschaltung kann ein z.B. greifkraftproportionales Ausgangssignal erzeugt werden.

Im Vorrichtungsgehäuse (124) sind ein Regler (181) und ein Greiferablaufprogrammspeicher (182) angeordnet. Diese liegen im Kreislauf der Steuerspannung. Jedes der im Greiferablaufprogrammspeicher (182) gespeicherten Greiferablaufprogramme enthält sämtliche Parameter, die zum Ansteuern und Regeln einer greifgutspezifischen Greifaufgabe erforderlich sind. Das Starten des Greiferablaufprogramms erfolgt vom Steuermodul (150) aus durch Eingabe oder Übermitteln einer Programmidentifikation, z.B. einer Programmnummer, und einem Startsignal.

Der Programmablauf und die erfolgreiche Beendigung des Greiferablaufprogramms wird mittels eines Soll-Ist-Vergleichs im Regler (181) der Handhabungsvorrichtung (121) geprüft. Bei erfolgreicher Beendigung des Greiferablaufprogramms oder beim Auftreten einer Störung wird vom Regler (181) ein binäres digitales Signal in einer vierten Übertragungsrichtung (194) ausgegeben. In der Handhabungsvorrichtung (121) sind der Regler (181) und das Wegmesssystem (127) Teile eines Regelkreises (188). Die Regelstrecke (189) bilden die Greiferschlitten (125).

Das Vorrichtungsgehäuse (124) hat eine z.B. abnehmbare Abdeckung (128). Diese ist beispielsweise an der Außenseite der Handhabungsvorrichtung (121) angeordnet. Nach Abnahme der Abdeckung (128) sind beispielsweise die elektrischen Bauteile der Handhabungsvorrichtung (121) zugänglich. Die Abdeckung (128) kann aus einem nichtmetallischem Werkstoff, z.B**.** Kunststoff, Glas, etc. hergestellt sein.

Als weitere elektrische Bauteile der Handhabungsvorrichtung (121) hat diese im Ausführungsbeispiel eine Antenne (184), einen Modulator und Demodulator (185) und einen Umwandler (186). Die Antenne (184) ist beispielsweise im Vorrichtungsgehäuse (124) unterhalb der Abdeckung (128) angeordnet. Diese Antenne (184) wird zum Datenaustausch mit dem Steuerungsmodul (150) eingesetzt. Anstatt einer einzelnen Antenne (184), die für das Senden und das Empfangen eingesetzt wird, können auch zwei Antennen eigesetzt werden. Hierbei ist dann beispielsweise eine Antenne für das Senden, die andere für das Empfangen von Daten und/oder Signalen bestimmt.

Die Antenne (184) ist mittels eines Hochfrequenzkabels (187) mit dem Modulator und Demodulator (185) verbunden. Die Signalübertragung erfolgt hierbei in der dritten Übertragungsrichtung (193). Es ist auch denkbar, die Handhabungsvorrichtung (121) z.B. mittels des Hochfrequenzkabels (187) mit der Antenne (172) der Antriebseinheit (111) zu verbinden. Beim Empfang wird aus dem mittels der Antenne (172; 184) aufgenommene hochfrequenten Signal mittels des Demodulators ein niederfrequentes Nutzsignal hergestellt. Dies erfolgt beispielsweise im Empfängerzweig des Sende-Empfängers (183) der Handhabungsvorrichtung (121). Das Nutzsignal wird z.B. dem Umwandler (186) zugeführt. Beim Senden wird mit dem vom Umwandler (186) ausgegebene Übermittlungssignal im Modulator und Demodulator (185) ein hochfrequentes Trägersignal moduliert. Dies erfolgt beispielsweise im Senderzweig des Sende-Empfängers (183). Das modulierte Signal wird anschließend mittels der Antenne (172; 184) abgestrahlt.

Der Umwandler (186) ist beispielsweise so aufgebaut wie der im Zusammenhang mit dem Steuerungsmodul (150) beschriebene Umwandler (153). Mittels des Umwandlers (186) wird beispielsweise ein im obengenannten Protokollformat übertragenes Datenpaket in digitale Daten umgewandelt, die vom Regler (181) sowie dem Greiferablaufprogrammspeicher (182) weiterverarbeitet werden. Bei einer Signallaufrichtung in der vierten Übertragungsrichtung (194) werden die vom Regler (181) ausgegebenen Signale mittels des Umwandlers (186) in ein Datenprotokollformat umgeformt. Bei einer Übertragung binärer Signale zwischen dem Steuermodul (150) und der Handhabungsvorrichtung (121) kann gegebenenfalls der Umwandler (186) sowohl im Empfangszweig als auch im Sendezweig entfallen.

Die Handhabungsvorrichtung (121) kann anstatt des beschriebenen Sende-Empfängers (183) einen vom Empfänger getrennten Sender aufweisen. Beispielsweise haben dann der Empfangszweig und der Sendezweig eigene Antennen. Auch können die Umwandler (186) für den Sendezweig und den Empfangszweig getrennt voneinander in der Handhabungsvorrichtung (121) angeordnet sein. Alle diese Bauteile werden beispielsweise mittels der Steuerspannung versorgt.

Im Ausführungsbeispiel verlaufen zwischen der Antriebseinheit (111) und der Handhabungsvorrichtung (121) die Leitungen der Steuerspannung (176) und der Lastspannung (177). Diese können beispielsweise zusammen mit dem Erdpotential über eine gemeinsame Steckverbindung geführt sein. Nach dem Trennen dieser Steckverbindung ist die Handhabungsvorrichtung (121) beispielsweise vom restlichen Werkstückwagen (100; 130) demontierbar.

Am Schienentragkörper (11) ist eine Messstation (17) angeordnet. Beim Verfahren der mit einem Werkstück (211; 212) beladenen Werkstückwagen (100; 130) wird beispielsweise mittels einer Lichtschranke und dem Weg- oder Geschwindigkeitssignal der Werkstückwagen (100; 130) die Länge eines zu bearbeitenden Werkstücks (211; 212) ermittelt. An der Messstation (17) kann auch eine Werkstückfreigabe erfolgen.

Der einzelne Bearbeitungsroboter (51; 71) steht mit einem Sockel (52) auf dem Hallenboden. Er trägt eine Werkzeugeinheit (53; 73), die relativ zu der Transportschiene (82) mehrachsig schwenkbar und verfahrbar ist. Die einzelne Werkzeugeinheit (53; 73) hat mehrere angetriebene Werkzeuge. Dies sind z.B. Fräs-, Bohr- und Sägewerkzeuge. Die Werkzeugeinheit (53) des ersten Bearbeitungsroboters (51) kann andere Werkzeuge aufweisen als die Werkzeugeinheit (73) des zweiten Bearbeitungsroboters (71). Auch die Kinematik der Bearbeitungsroboter (51; 71) kann unterschiedlich ausgebildet sein.

Neben dem Schienentragkörper (11) steht in der Darstellung der Figur 1 ein Beschickungsroboter (221) auf dem Hallenboden. Der Beschickungsroboter (221) hat eine Werkstück-Greifvorrichtung (222). Diese ist relativ zur Transportschiene (82) schwenkbar und verfahrbar ausgebildet. Die Werkstück-Greifvorrichtung (221) kann das zu bearbeitende Werkstück (211; 212) pneumatisch und/oder mechanisch greifen. Beispielsweise vor dem Greifen oder beim Greifen werden zwei Referenzkanten des Werkstücks (211; 212) ermittelt. Dies kann optisch und/oder mittels mechanischer Anlage erfolgen.

Die in der Figur 1 dargestellte Fertigungszelle (10) hat außerdem eine Werkstückentnahmevorrichtung (231). Diese umfasst im Ausführungsbeispiel einen Entnahmeroboter (231). Der Entnahmeroboter (231) ist ähnlich aufgebaut wie der Beschickungsroboter (221). Die in der Fertigungszelle (10) bearbeiteten Werkstücke (211; 212) werden mittels des Entnahmeroboters (231) aus dem Arbeitsraum entnommen und z.B. auf einem Stapel abgelegt. Zum Greifen des Werkstücks (211; 212) verfügt der Entnahmeroboter (231) beispielsweise über eine Greifvorrichtung (232), z.B. einen Zwei-Backen-Parallelgreifer. Dieser hat beispielsweise zwei Stahlbacken mit Kunststoffeinsätzen, die jeweils einen Hub von 13 Millimetern haben. Die Schließkraft beträgt z.B. 1920 Newton.

Die Werkstücke (211; 212) können als Stapel, einzeln getaktet oder in kleinen Losen in den Aufnahmebereich des Beschickungsroboters (221) gefördert werden. Damit kann die Kopplung der Fertigungszelle (10) mit den im Materialfluss vorhergehenden Fertigungsstationen beeinflusst werden. Die Fertigungszelle (10) kann auch mittels Gleisen mit einer vorangehenden Fertigungsstation verbunden sein. Die Werkstücke (211; 212) können dann z.B. bereits auf Werkstückwagen (100; 130) an die Fertigungszelle (10) gefördert werden.

Vor dem Einsetzen des Werkstücks (211; 212) stehen z.B. zwei Werkstückwagen (100, 130) in der Längsrichtung (15) versetzt zueinander in einer vorgegebenen Position im Einsetzbereich (31). Die Handhabungsvorrichtungen (121) sind jeweils geöffnet. Der Stillstand der Werkzeugwagen (100, 130) im Einsetzbereich (31) wird als Datenprotokoll von der Antriebseinheit (111) jeweils drahtlos an das Steuerungsmodul (150) übertragen. Nach der Demodulation und der Umwandlung steht das Datenprotokoll als digitaler Datensatz des einzelnen Werkstückwagens (100; 130) der Recheneinheit des Steuerungsmoduls (150) zur Verfügung. Der geöffnete Zustand der Handhabungsvorrichtungen (121) wird jeweils als binäres Signal drahtlos an das Steuerungsmodul (150) übertragen. Aus den Daten der Antriebseinheiten (111) und den Signalen der Handhabungsvorrichtungen (121) ermittelt das Steuerungsmodul (150) ein z.B. binäres Freigabesignal, das an die speicherprogrammierbare Steuerung (141) übertragen wird.

Die speicherprogrammierbare Steuerung (141) steuert den Beschickungsroboter (221), der das Werkstück (211; 212) in die Handhabungsvorrichtungen (121) einsetzt. Sobald das Werkstück (211; 212) in der vorgesehenen Position zwischen den Greifelementen (123) steht, sendet die speicherprogrammierbare Steuerung (141) ein Freigabesignal an das Steuerungsmodul (150). Das Steuerungsmodul (150) sendet beispielsweise ein handhabungsvorrichtungsspezifisches Signal, ein greifgutspezifisches Signal und ein Startsignal als binäre Signale über seine Antenne (164) aus. Gleichzeitig wird ein Fahren der beiden zugehörigen Werkstückwagen (100, 130) entlang des Transportgleises (82) mittels des Steuerungsmoduls (150) blockiert.

In den so angesprochenen Handhabungsvorrichtungen (121) wird jeweils das vorgesehene greifgutspezifische Greiferablaufprogramm gestartet. Mittels des jeweiligen Greiferantriebsmotors (126) werden die Greiferschlitten (125) derart verfahren, dass sie sich an das Werkstück (211; 212) anlegen und dieses klemmen. Sobald der vom greifkraftbezogenen Sensor (127) an den Regler (181) übermittelte Signalwert innerhalb eines vorgegebenen Toleranzbereichs liegt, sendet die Handhabungsvorrichtung (121) ein Endsignal des Greiferablaufprogramms an das Steuerungsmodul (150).

Das Steuerungsmodul (150) verriegelt die beiden Handhabungsvorrichtungen (121) und steuert die beiden das Werkstück (211; 212) tragenden Werkstückwagen (100, 130) an. Die beiden Werkstückwagen (100, 130) werden z.B. mit einem gemeinsamen Fahrprofil so verfahren, dass sie immer den gleichen Abstand zueinander einhalten. Gegebenenfalls kann dies mittels des Abstandssensors (136) unterstützt werden. Hierbei ist beispielsweise das in der Förderrichtung vorne liegende Fahrzeug (100; 130) das Masterfahrzeug und das andere Fahrzeug das Slavefahrzeug (130; 100). Das an die Antriebseinheiten (111) der Werkstückwagen (100, 130) übermittelte Fahrprofil umfasst beispielsweise Werte für die Beschleunigung, die Geschwindigkeit und den Fahrweg. Während des Fahrens erfolgt ein regelmäßiger Datenaustausch zwischen dem Steuerungsmodul (150) und den Werkstückwagen (100; 130). Das Fahrprofil der Werkstückwagen (100; 130) wird damit in Echtzeit in einem geschlossenen Regelkreis geregelt.

Das Werkstück (211; 212) wird mittels der Werkstückwagen (100, 130) beispielsweise zunächst zu der der Beschickung im Materialfluss nachgeschalteten Messstation (17) gefördert. Hier kann außer der oben beschriebenen Längenmessung auch eine Höhen- und/oder eine Dickenmessung des Werkstücks (211; 212) durchgeführt werden.

Sobald die der Messstation (17) im Materialfluss nachgeschaltete erste Bearbeitungsstation (40) frei ist, wird das erste Werkstück (211) mittels der Werkstückwagen (100, 130) in den Arbeitsbereich des ersten Bearbeitungsroboters (51) verfahren. Der Stillstand der Werkstückwagen (100, 130) in der vorgesehenen Position gibt die Folgefunktionen der Fertigungszelle (10) frei. Das Steuerungsmodul (150) sendet eine entsprechende Freigabe an die übergeordnete Steuerung (141). Die Stützvorrichtung (41) wird zur Anlage an das erste Werkstück (211) verschoben und am ersten Werkstück (211) fixiert. Die Stützvorrichtung (41) stützt nun während der nachfolgenden Bearbeitung an der ersten Bearbeitungsstation (40) das erste Werkstück (211) ab.

Zur Bearbeitung dieses ersten Werkstücks (211) schwenkt und/oder verfährt der erste Bearbeitungsroboter (51) die werkzeugbestückte Werkzeugeinheit (53) an das erste Werkstück (211). Falls im Werkstück (211) Durchgangsbohrungen vorgesehen sind, können die dahinterliegenden Saugnäpfe der Stützvorrichtung (41) zurückgefahren werden. Nach Beendigung der Bearbeitung des ersten Werkstücks (211) an der ersten Bearbeitungsstation (40) werden die Werkzeugeinheit (53) und die Stützvorrichtung (41) in ihre jeweiligen Ausgangslagen zurückgefahren. Beispielsweise wird die erste Stützvorrichtung (41) in ihre Bereitschaftslage zurückverfahren. Die Werkstückwagen (100, 130) verfahren das Werkstück (211) an die zweite Bearbeitungsstation (60).

Die Bearbeitung des ersten Werkstücks (211) an der zweiten Bearbeitungsstation (60) erfolgt analog zur Bearbeitung dieses Werkstücks (211) an der ersten Bearbeitungsstation (40). An dieser zweiten Bearbeitungsposition (60) werden z.B. weitere Einsenkungen in das erste Werkstück (211) eingebracht, Beschläge gefügt, etc. Die Durchführzeit der Arbeitsgänge an der zweiten Bearbeitungsstation (60) entspricht beispielsweise weitgehend der Durchführzeit der Arbeitsgänge an diesem Werkstück (211) an der ersten Bearbeitungsstation (40). Als Durchführzeit an der einzelnen Bearbeitungsstation (40; 60) ist hier das Zeitintervall zwischen dem Beginn des ersten Werkzeugeinsatzes des Bearbeitungsroboters (51; 71) bis zur Beendigung des letzten Werkzeugeinsatzes dieses Bearbeitungsroboters (51; 71) am einzelnen Werkstück (211; 212) bezeichnet.

Während der Bearbeitung des ersten Werkstücks (211) an der ersten Bearbeitungsstation (40) wird z.B. mittels des Beschickungsroboters (221) ein zweites Werkstück (212) im Einsetzbereich (31) bereitgestellt. Sobald das erste Werkstück (211) aus der ersten Bearbeitungsstation (40) in die mit dieser z.B. pufferlos gekoppelten zweiten Bearbeitungsstation (60) verfahren wird, wird das zweite Werkstück (212) zur Bearbeitung freigegeben und an die erste Bearbeitungsstation (40) gefördert.

Die Bearbeitung des zweiten Werkstücks (212) an der ersten Bearbeitungsstation (40) erfolgt analog zur Bearbeitung des ersten Werkstücks (211) an dieser Bearbeitungsstation (40). Hierbei können die bei beiden Werkstücken (211; 212) angewendeten Arbeitsgänge und Werkzeuge unterschiedlich sein. Beispielsweise ist die Durchführzeit der am zweiten Werkstück (212) durchgeführten Arbeitsgänge an der ersten Bearbeitungsstation (40) zumindest annähernd gleich der Durchführzeit der am ersten Werkstück (211) an der zweiten Bearbeitungsstation (60) durchgeführten Arbeitsgänge. Zumindest annähernd bedeutet hier, dass die Durchführzeiten sich um maximal 10 % unterscheiden.

Nach Beendigung der Bearbeitung des ersten Werkstücks (211) an der zweiten Bearbeitungsstation (60) wird das erste Werkstück (211) mittels der Werkstückwagen (100, 130) in den Entnahmebereich (201) gefördert. Das zweite Werkstück (212) wird zur zweiten Bearbeitungsstation (60) gefördert. Die Bearbeitung des zweiten Werkstücks (212) an der zweiten Bearbeitungsstation (60) erfolgt, wie oben beschrieben. Die für die Bearbeitung des zweiten Werkstücks (212) eingesetzten Werkzeuge der zweiten Werkzeugeinheit (73) können sich von den für das erste Werkstück (211) eingesetzten Werkzeugen dieser Werkzeugeinheit (73) unterscheiden. Beispielsweise entspricht die Durchführzeit der zweiten Bearbeitungsstation (60) zur Bearbeitung des zweiten Werkstücks (212) zumindest annähernd der für das erste Werkstück (211) eingesetzten Durchführzeit.

Es ist auch denkbar, Durchführzeiten unterschiedlicher Länge an den einzelnen Bearbeitungsstationen (40; 60) vorzusehen. Beispielsweise hat dann abwechselnd die erste Bearbeitungsstation (40) oder die zweite Bearbeitungsstation (60) eine längere Durchführzeit als die jeweilige andere Bearbeitungsstation (60; 40). Die Ausbringungsrate kann z.B. geringfügig gegenüber dem oben genannten Ausführungsbeispiel verändert sein. Die Schwankungsbreite der Ausbringungsrate ist erhöht.

Das einzelne Werkstück (211; 212) kann auch an einer der Bearbeitungsstationen (40; 60) vollständig bearbeitet werden. In diesem Fall werden jeweils zwei Werkstücke (211; 212) bereitgestellt. Die Durchführzeit für das einzelne Werkstück (211; 212) ist beispielsweise an beiden Bearbeitungsstationen (40, 60) gleich. Die Ausbringungsrate entspricht in diesem Fall der im Zusammenhang mit dem ersten Ausführungsbeispiel beschriebenen Ausbringungsrate.

Nach abgeschlossener Bearbeitung wird das einzelne Werkstück (211; 212) mittels der Werkstückwagen (100, 130) in den Entnahmebereich (201) gefördert. Die Werkstückwagen (100, 130) bleiben an einer vorgegebenen Position stehen. Im Steuerungsmodul (150) werden die Antriebseinheiten (111) der Werkstückwagen (100, 130) verriegelt und die Handhabungsvorrichtungen (121) freigeschaltet. Der Entnahmeroboter (231) greift mittels der Greifvorrichtung (232) das Werkstück (211; 212) z.B. am oberen Rand. Das Steuerungsmodul (150) sendet ein Startsignal an beide Handhabungsvorrichtungen (121). Die Handhabungsvorrichtungen (121) werden gemäß dem vorgesehenen Greiferablaufprogramm geöffnet. Der Entnahmeroboter (231) entnimmt das Werkstück (211; 212), schwenkt es und legt es z.B. auf einen Transportwagen, einem Band, etc. ab. Die fertigbearbeiteten Werkstücke (211; 212) können entweder einzeln oder losweise weitergefördert werden.

Nach Entnahme des Werkstücks (211; 212) und Umschalten der Freigabe verfahren die leeren Werkstückwagen (100, 130) vom Entnahmebereich (201) weiter entlang der Transportschiene (82). Hierbei kann ihr Abstand zueinander geringer sein als während des Verfahrens mit dem Werkstück (211; 212).

Sie gelangen beispielsweise einzeln auf eine erste Drehscheibe (13). Hier werden sie z.B. angehalten. Die Drehscheibe (13) schwenkt um 180 Grad, sodass der einzelne Werkstückwagen (100, 130) auf die rückseitige Rückführschiene (83) fahren kann. Beispielsweise können der Werkstückwagen (100, 130) und/oder die Handhabungsvorrichtung (121) nun mittels eines zweiten Senders des Steuerungsmoduls (150) angesprochen werden. Hierbei stellt sich die Empfangsfrequenz des jeweiligen Empfängers z.B. auf das jeweils stärkere Sendesignal des Steuerungsmoduls (150) ein.

Der gleiche Vorgang erfolgt für die nachfolgenden Werkstückwagen (130; 100). Die Werkstückwagen (100, 130) verfahren nun entlang der Rückführschiene (83) bis zur zweiten Drehscheibe (14), die sich in der Nähe des Einsetzbereichs (31) befindet. Hier werden die Werkstückwagen (100, 130) wieder auf die Transportschiene (82) umgelenkt. Im Einsetzbereich (31) können sie dann mit neuen zu bearbeitenden Werkstücken (211; 212) bestückt werden. Beispielsweise sind in der Fertigungszelle (10) bis zu 18 Werkstückwagen (100, 130) im Umlauf.

### Bezugszeichenliste:

- 10: Fertigungszelle
- 11: Schienentragkörper
- 12: Leitgitter
- 13: Drehscheibe
- 14: Drehscheibe
- 15: Längsrichtung
- 16: Querrichtung
- 17: Messstation

- 19: Zahnstange

- 21: elektrische Leiterbahnen
- 22: elektrische Leiterbahnen
- 23: elektrische Leiterbahnen
- 24: elektrische Leiterbahnen
- 25: elektrische Leiterbahnen

- 31: Einsetzbereich

- 40: erste Bearbeitungsstation
- 41: erste Stützvorrichtung

- 51: Bearbeitungsroboter
- 52: Sockel
- 53: Werkzeugeinheit

- 60: zweite Bearbeitungsvorrichtung
- 61: zweite Stützvorrichtung

- 71: Bearbeitungsroboter
- 73: Werkzeugeinheit

- 80: Fördersystem
- 81: Werkstücktransportvorrichtung
- 82: Transportgleis, Transportschiene
- 83: Rückführgleis, Rückführschiene

- 100: Fahrzeuge, Werkstückwagen
- 101: Kugelumlaufschuhe

- 103: Schleifkontakte
- 104: Schleifkontakt
- 105: Schleifkontakt
- 106: Schleifkontakt
- 107: Schleifkontakt
- 108: Parallellogrammführung
- 109: Gehäuse

- 111: Antriebseinheit
- 112: Deckel
- 113: Flanschträger
- 114: Antriebsmotor
- 115: Antriebsrad
- 116: Schmierrad
- 117: geschwindigkeitsbezogener Sensor, Drehgeber

- 121: Handhabungsvorrichtung
- 122: Werkstückaufnahme
- 123: Greifelement
- 124: Vorrichtungsgehäuse
- 125: Greiferschlitten
- 126: Greiferantriebsmotor
- 127: greifkraftbezogener Sensor, Greifkraftsensor, Wegmesssystem
- 128: Abdeckung

- 130: Fahrzeuge, Werkstückwagen
- 135: Fahrrichtung
- 136: Abstandssensor

- 140: Steuerungsschrank

- 150: Steuerungsmodul
- 151: Programmspeicher
- 152: Regler
- 153: Umwandler
- 154: Sende-Empfänger
- 155: Datenleitung zur übergeordneten Steuerung
- 156: erster Reglereingang
- 157: zweiter Reglereingang, Sollwerteingang
- 158: dritter Reglereingang, Messwerteingang
- 159: Reglerausgang

- 161: Regelstrecke
- 162: Datenleitung
- 163: Modulator-Demodulator
- 164: Antenne

- 170: Ansteuerungsbaugruppe
- 171: Sende-Empfänger
- 172: Antenne
- 173: Demodulator-Modulator
- 174: Umwandler

- 176: Steuerspannung
- 177: Lastspannung

- 181: Regler
- 182: Greiferablaufprogrammspeicher
- 183: Sende-Empfänger
- 184: Antenne
- 185: Modulator und Demodulator
- 186: Umwandler
- 187: Hochfrequenzkabel
- 188: Regelkreis
- 189: Regelstrecke

- 191: erste Senderichtung, Übertragungsrichtung
- 192: zweite Senderichtung, Übertragungsrichtung
- 193: dritte Übertragungsrichtung
- 194: vierte Übertragungsrichtung

- 201: Entnahmebereich

- 211: Werkstück
- 212: Werkstück

- 221: Beschickungsroboter
- 222: Werkstückgreifvorrichtung

- 231: Werkstückentnahmevorrichtung, Entnahmeroboter
- 232: Greifvorrichtung

- m/s: Maßeinheit für Geschwindigkeit [Meter pro Sekunde]
- N: Maßeinheit für Kraft [Newton]
- M: Symbol für Motor

## Patentansprüche

1. Fördersystem (80) einer Fertigungszelle (10) mit einem ortsfesten Steuerungsmodul (150) und mit mindestens einem bahn- oder gleisgebundenen selbstfahrenden Fahrzeug (100; 130),
- wobei das Steuerungsmodul (150) mindestens eine Antenne (164) zur bidirektionalen drahtlosen Übertragung von Daten und Signalen zwischen dem Fahrzeug (100; 130) und dem Steuerungsmodul (150) hat,
- wobei das Fahrzeug (100; 130) mindestens eine Antenne (172) aufweist, die einer Antriebseinheit (111) des Fahrzeugs (100; 130) zugeordnet ist,
- wobei die Antriebseinheit (111) einen Umwandler (174) für die Umwandlung eines vom Steuerungsmodul (150) in einem Protokollformat übermittelten Datensatzes in digitale Ansteuersignale eines Antriebsmotors (114) der Antriebseinheit (111) aufweist,
**dadurch gekennzeichnet,**
- **dass** die Antriebseinheit (111) einen geschwindigkeitsbezogenen Sensor (117) aufweist, wobei die Antriebseinheit (111) ausgebildet ist, das Ausgangssignal dieses geschwindigkeitsbezogenen Sensors (117) in einem Protokollformat an das Steuerungsmodul (150) zu übertragen, sodass das Steuerungsmodul (150) ein Fahrprofil des Fahrzeugs (100; 130) in Echtzeit in einem geschlossenen Kreis regelt.

2. Fördersystem (80) nach Anspruch 1, **dadurch gekennzeichnet,**
- **dass** das Fahrzeug (100, 130) mindestens eine Handhabungsvorrichtung (121) trägt,
- **dass** der Handhabungsvorrichtung (121) mindestens eine zweite Antenne (184) des Fahrzeugs (100; 130) zugeordnet ist oder dass die Handhabungsvorrichtung (121) mit der der Antriebseinheit (111) zugeordneten Antenne (172) verbunden ist,
- **dass** die Handhabungsvorrichtung (121) einen Regler (181) und einen Greiferablaufprogrammspeicher (182) aufweist, sodass ein binäres Signal des Steuerungsmoduls (150) ein Greiferablaufprogramm startet,
- **dass** die Handhabungsvorrichtung (121) einen greifkraftbezogenen Sensor (127) aufweist, dessen Daten an den Regler (181) der Handhabungsvorrichtung (121) übertragen werden und
- **dass** die Handhabungsvorrichtung (121) nach Abschluss des Greiferablaufprogramms ein binäres Signal an das Steuerungsmodul (150) ausgibt.

3. Fördersystem (80) nach Anspruch 2, **dadurch gekennzeichnet,**
- **dass** das Steuerungsmodul (150) mindestens einen Sender und mindestens einem Empfänger oder mindestens einem Sende-Empfänger (154) hat und
- **dass** sowohl jede Antriebseinheit (111) als auch jede Handhabungsvorrichtung (121) einen Sender und einen Empfänger oder einen Sende-Empfänger (171, 183) zur Kommunikation mit dem Steuerungsmodul (150) aufweist.

4. Fördersystem (80) nach Anspruch 2, **dadurch gekennzeichnet, dass** die drahtlose Verbindung des Steuerungsmoduls (150) zur Antriebseinheit (111) und zur Handhabungsvorrichtung (121) des Fahrzeugs (100; 130) jeweils eine Punkt-zu-Punkt-Verbindung ist.

5. Fördersystem (80) nach Anspruch 1, **dadurch gekennzeichnet, dass** das Steuerungsmodul (150) ein einem Modulator des Senders oder des Sendezweigs des Sende-Empfängers (154) vorgeschalteten Umwandler (153) zum Übertragen der übermittelten Daten in ein Datenprotokoll aufweist.

6. Fördersystem (80) nach Anspruch 1, **dadurch gekennzeichnet, dass** im Steuerungsmodul (150) die Antriebseinheit (111) und die Handhabungsvorrichtung (121) gegenseitig verriegelt sind, sodass das Steuerungsmodul (150) alternativ entweder die Antriebseinheit (111) oder die Handhabungsvorrichtung (121) ansteuert.

7. Fördersystem (80) nach Anspruch 1, **dadurch gekennzeichnet, dass** die Datenleitung (162) zwischen dem Empfänger oder dem Empfängerzweig des Sende-Empfängers (154; 171; 183) und dem Umwandler (153; 174; 186) und/oder die Datenleitung zwischen dem Umwandler (153; 174; 186) und dem Sender oder dem Senderzweig des Sende-Empfängers (154; 171; 183) eine ungeschirmte Leitung ist.

8. Fördersystem (80) nach Anspruch 1, **dadurch gekennzeichnet, dass** das einzelne Fahrzeug (100; 130) mindestens einen in einer Fahrrichtung (135) orientierten Abstandsensor (136) aufweist.

9. Fördersystem (80) nach Anspruch 1, **dadurch gekennzeichnet, dass** dem Steuerungsmodul (150) mindestens zwei Fahrzeuge (100, 130) zugeordnet sind, die jeweils mindestens eine Handhabungsvorrichtung (121) haben.

10. Fertigungszelle (10) mit einer speicherprogrammierbaren Steuerung (141) und mit einem Fördersystem (80) nach Anspruch 1, **dadurch gekennzeichnet, dass** das Steuerungsmodul (150) an die speicherprogrammierbare Steuerung (141) angeschlossen ist.

## Claims

1. A conveying system (80) of a production cell (10) having a stationary control module (150) and at least one track- or line-bound, self-driving vehicle (100; 130),
- wherein the control module (150) has at least one antenna (164) for the bidirectional wireless transmission of data and signals between the vehicle (100; 130) and the control module (150),
- wherein the vehicle (100; 130) has at least one antenna (172), which is assigned to a drive unit (111) of the vehicle (100; 130),
- wherein the drive unit (111) has a converter (174) for converting a data set transferred in a protocol format by the control module (150) into digital actuation signals of a drive motor (114) of the drive unit (111),
**characterised**
- **in that** the drive unit (111) has a speed-related sensor (117), wherein the drive unit (111) is designed to transmit the output signal of this speed-related sensor (117) in a protocol format to the control module (150) so that the control module (150) controls a driving profile of the vehicle (100; 130) in real time in a closed loop.

2. The conveying system (80) according to Claim 1, **characterised**
- **in that** the vehicle (100, 130) bears at least one handling device (121),
- **in that** the handling device (121) is assigned at least one second antenna (184) of the vehicle (100; 130), or the handling device (121) is connected to the antenna (172) assigned to the drive unit (111),
- **in that** the handling device (121) has a control unit (181) and a gripper sequence program memory (182) so that a binary signal of the control module (150) starts a gripper sequence program,
- **in that** the handling device (121) has a gripping-force-related sensor (127), the data of which are transmitted to the control unit (181) of the handling device (121), and
- **in that** the handling device (121) outputs a binary signal to the control module (150) after the gripper sequence program is completed.

3. The conveying system (80) according to Claim 2, **characterised**
- **in that** the control module (150) has at least one transmitter and at least one receiver or at least one transceiver (154), and
- **in that** each drive unit (111) and each handling device (121) has a transmitter and a receiver or a transceiver (171, 183) for communication with the control module (150).

4. The conveying system (80) according to Claim 2, **characterised in that** the wireless connection of the control module (150) to the drive unit (111) and to the handling device (121) of the vehicle (100; 130) is in each case a point-to-point connection.

5. The conveying system (80) according to Claim 1, **characterised in that** the control module (150) has a converter (153), which is connected upstream of a modulator of the transmitter or of the transmitter branch of the transceiver (154), for transmitting the transferred data in a data protocol.

6. The conveying system (80) according to Claim 1, **characterised in that** the drive unit (111) and the handling device (121) are mutually locked in the control module (150) so that the control module (150) alternatively actuates either the drive unit (111) or the handling device (121).

7. The conveying system (80) according to Claim 1, **characterised in that** the data cable (162) between the receiver or the receiver branch of the transceiver (154; 171; 183) and the converter (153; 174; 186), and/or the data cable between the converter (153; 174; 186) and the transmitter or the transmitter branch of the transceiver (154; 171; 183) is an unshielded cable.

8. The conveying system (80) according to Claim 1, **characterised in that** the individual vehicle (100; 130) has at least one distance sensor (136), which is oriented in a direction of travel (135).

9. The conveying system (80) according to Claim 1, **characterised in that** the control module (150) is assigned at least two vehicles (100, 130), which each have at least one handling device (121).

10. A production cell (10) having a programmable logic controller (141) and having a conveying system (80) according to Claim 1, **characterised in that** the control module (150) is connected to the programmable logic controller (141).

## Revendications

1. Système de convoyage (80) d'une cellule de fabrication (10), doté d'un module de commande (150) stationnaire et doté d'au moins un véhicule (100 ; 130) automoteur sur circuit ou sur rail,
- le module de commande (150) ayant au moins une antenne (164), assurant la transmission bidirectionnelle sans fil de données et de signaux entre le véhicule (100 ; 130) et le module de commande (150),
- le véhicule (100 ; 130) comportant au moins une antenne (172), qui est associée à une unité d'entraînement (111) du véhicule (100 ; 130),
- l'unité d'entraînement (111) comportant un convertisseur (174), destiné à convertir un jeu de données transmis par le module de commande (150) dans un format protocolaire en un signal d'activation numérique d'un moteur d'entraînement (114) de l'unité d'entraînement (111),
**caractérisé**
- **en ce que** l'unité d'entraînement (111) comporte un capteur (117) relatif à la vitesse, l'unité d'entraînement (111) étant conçue pour transmettre au module de commande (150) le signal de sortie dudit capteur (117) relatif à la vitesse dans un format protocolaire, de sorte que le module de commande (150) règle un profil de déplacement du véhicule (100 ; 130) en temps réel dans un circuit fermé.

2. Système de convoyage (80) selon la revendication 1, **caractérisé**
- **en ce que** le véhicule (100, 130) porte au moins un dispositif de manipulation (121),
- **en ce qu'**au dispositif de manipulation (121) est associée au moins une deuxième antenne (184) du véhicule (100 ; 130) ou en ce que le dispositif de manipulation (121) est connecté avec l'antenne (172) associée à l'unité d'entraînement (111),
- **en ce que** le dispositif de manipulation (121) comporte un régulateur (181) et une mémoire de programme séquentiel (182) de préhenseur, de sorte qu'un signal binaire du module de commande (150) démarre un programme séquentiel de préhenseur,
- **en ce que** le dispositif de manipulation (121) comporte un capteur (127) relatif à la force de préhension, dont les données sont transmises au régulateur (181) du dispositif de manipulation (121) et
- **en ce qu'**après l'achèvement du programme séquentiel de préhenseur, le dispositif de manipulation (121) délivre un signal binaire à l'attention du module de commande (150).

3. Système de convoyage (80) selon la revendication 2, **caractérisé**
- **en ce que** le module de commande (150) a au moins un émetteur et au moins un récepteur ou au moins un émetteur-récepteur (154) et
- **en ce qu'**aussi bien chaque unité d'entraînement (111) qu'également chaque dispositif de manipulation (121) comporte un émetteur et un récepteur ou un émetteur-récepteur (171, 183), destiné à communiquer avec le module de commande (150).

4. Système de convoyage (80) selon la revendication 2, **caractérisé en ce que** la connexion sans fil du module de commande (150) vers l'unité d'entraînement (111) et vers le dispositif de manipulation (121) du véhicule (100 ; 130) est chaque fois une connexion point-à-point.

5. Système de convoyage (80) selon la revendication 1, **caractérisé en ce que** le module de commande (150) a un convertisseur (153) monté en amont du modulateur de l'émetteur ou de la branche d'émission de l'émetteur-récepteur (154), destiné à transférer des données transmises dans un protocole de données.

6. Système de convoyage (80) selon la revendication 1, **caractérisé en ce que** dans le module de commande (150), l'unité d'entraînement (111) et le dispositif de manipulation (121) sont réciproquement verrouillés, de sorte que le module de commande (150) active alternativement, soit l'unité d'entraînement (111) ou le dispositif de manipulation (121).

7. Système de convoyage (80) selon la revendication 1, **caractérisé en ce que** la ligne de données (162) entre le récepteur ou la branche de réception de l'émetteur-récepteur (154 ; 171 ; 183) et le convertisseur (153 ; 174 ; 186) et / ou la ligne de données entre le convertisseur (153 ; 174 ; 186) et l'émetteur ou la branche d'émission de l'émetteur-récepteur (154 ; 171 ; 183) est une ligne non blindée.

8. Système de convoyage (80) selon la revendication 1, **caractérisé en ce que** le véhicule (100 ; 130) individuel comporte au moins un capteur de distance (136) orienté dans une direction de déplacement (135).

9. Système de convoyage (80) selon la revendication 1, **caractérisé en ce qu'**au module de commande (150) sont associés au moins deux véhicules (100, 130), qui ont chacun au moins un dispositif de manipulation (121).

10. Cellule de fabrication (10), dotée d'un système de commande (141) à mémoire programmable et d'un système de convoyage (80) selon la revendication 1, **caractérisé en ce que** le module de commande (150) est raccordé sur le système de commande (141) à mémoire programmable.
